# EUROPÄISCHE PATENTSCHRIFT

(11) **EP 2 467 015 B1**
(45) Veröffentlichungstag und Bekanntmachung des Hinweises auf die Patenterteilung: **09.09.2015**
(21) Anmeldenummer: 10747798.6
(22) Anmeldetag: 23.07.2010
(51) Int. Cl.: A01K 89/016

(54) **ANGELROLLE, INSBESONDERE FÜR DAS FLIEGENFISCHEN**
FISHING REEL, ESPECIALLY FOR FLY FISHING
MOULINET, NOTAMMENT POUR LA PÊCHE À LA MOUCHE

(30) Priorität: 17.08.2009 DE 102009037509; 04.12.2009 DE 102009056825
(43) Veröffentlichungstag der Anmeldung: 27.06.2012
(73) Patentinhaber: Triller, Wolfgang, 84152 Mengkofen (DE)
(72) Erfinder: Triller, Wolfgang, 84152 Mengkofen (DE)
(74) Vertreter: advotec.
(86) Internationale Anmeldenummer: PCT/DE2010/000863
(87) Internationale Veröffentlichungsnummer: WO 2011/020453

(56) Entgegenhaltungen:
- EP-A1- 1 745 696
- WO-A1-2009/093062
- WO-A2-03/061372
- DE-U1- 8 025 268
- NL-C2- 1 002 263
- US-B1- 6 467 712

## Beschreibung

Die vorliegende Erfindung betrifft eine Angelrolle, insbesondere für das Fliegenfischen, mit einer Spule, die mit ihrem ring- oder röhrenförmigen Nabenteil (Spulenkern) auf einer Achse abziehbar gelagert ist.

Bei Angelrollen ist es oft gewünscht, dass die die Angelschnur aufnehmenden Spulen für verschiedene Einsatzzwecke ausgetauscht werden können. Bei bekannten Angelrollen, insbesondere Spezialrollen, die das Dual-Mode-System beinhalten, müssen entweder sehr kostenintensive Ersatzspulen eingesetzt werden oder Spulenkörper, die vom Innendurchmesser sehr groß ausgelegt sind (Großkernspulen), damit die Spule über die Mechanik geschoben werden kann. Die Ersatzspulen sind meist nur sehr aufwendig und/oder mit Spezialwerkzeug von der Mechanik zu trennen. Dokument WO 03/061372 A2 offenbart eine Angelrolle gemäß dem Oberbegriff des unabhängigen Anspruchs 1.

Der vorliegenden Erfindung liegt die Aufgabe zugrunde, eine Angelrolle zur Verfügung zu stellen, welche die Nachteile der Angelrollen aus dem Stand der Technik überwindet. Der vorliegenden Erfindung liegt insbesondere die Aufgabe zugrunde, eine Angelrolle zur Verfügung zu stellen, bei der neben der Reduzierung der Kosten von Ersatzspulen auch die Verwendung von kleinen Spulenkörpern möglich ist.

Diese Aufgabe wird gelöst durch eine Angelrolle der eingangs genannten Art, die dadurch gekennzeichnet ist, dass die abziehbare Achse über mindestens eine lösbare Rastverbindung axial im Nabenteil fixiert ist und über mindestens eine formschlüssige Verbindung drehfest im Spulenkörper gehalten ist.

Bei der erfindungsgemäßen Angelrolle kann die Spule auf einfache Art und Weise durch einfaches Abziehen von der sie tragenden Achse gelöst werden. Bei der erfindungsgemäßen Angelrolle weist die Achse mindestens ein elastisch vorgespanntes Rastelement auf, wobei in der inneren Umfangsfläche des Nabenteils des Spulenkörpers vorzugsweise mindestens eine Rastaufnahme zum Einrasten des Rastelementes vorgesehen ist.

Erfindungsgemäß ist das mindestens eine Rastelement eine Kugel (Druckkugel), die in ihrer Führung von einer Druckfeder belastet ist. Durch derartige elastisch vorgespannte Rastelemente ist ein Wechseln der Spule besonders komfortabel möglich, indem der Kraftaufwand zum Abziehen der Spule von der Achse bzw. zum Aufschieben der Spule auf die Achse (bis zum Einrasten) niedrig ist.

Mit Vorteil ist die mindestens eine Rastaufnahme eine Nut, vorzugsweise eine Ringnut. Eine derartige Nut ist einfach bei der Herstellung des Spulenkörpers in den Innenumfang des Spulenkerns einbringbar. Zum anderen weist eine derartige Nut den Vorteil auf, dass die Rastelemente, insbesondere Druckkugeln, an jeder beliebigen Stelle der Nut in diese einrastbar sind.

Bei einer bevorzugten Ausführungsform der erfindungsgemäßen Angelrolle weist die Achse mindestens ein Mitnehmerelement, vorzugsweise einen Keil, Zapfen oder einen Stift auf, welches zur formschlüssigen Verbindung mit dem Spulenkörper in eine Vertiefung, vorzugsweise eine in Längsrichtung des Nabenteils verlaufende Nut, in der inneren Umfangsfläche des Nabenteils eingreift. Das Mitnehmerelement kann beispielsweise lösbar mit der Achse verbunden sein (z. B. verschraubt). Die mit dem Mitnehmerelement zusammenwirkende Vertiefung erstreckt sich vorzugsweise von einem äußeren Ende der inneren Umfangsfläche des Nabenteils bis ca. zur Mitte des Nabenteils. Die Breite der Vertiefung ist so bemessen, dass das Mitnehmerelement in der Vertiefung kaum bis überhaupt kein Spiel hat.

Vorzugsweise weist das Nabenteil an einem Ende einen größeren Innendurchmesser auf als am anderen Ende, wobei der Innenumfang des Nabenteils vorzugsweise mehrstufig ausgebildet ist. In der Regel erhöht sich der Innendurchmesser des Nabenteils von einem Ende zum anderen Ende in mindestens einer, vorzugsweise drei Stufen. Auch kann sich der Innendurchmesser konisch verjüngen. Durch die Abnahme des Innendurchmessers von einem Ende zum anderen Ende wird u. a. erreicht, dass die Achse nur an einer Seite des Nabenteils in dieses eingeführt werden kann, da der Außendurchmesser der Achse an dessen breitester Stelle größer ist, als der Innendurchmesser des Nabenteils an einem der beiden Ende. Dadurch kann die Achse niemals "verkehrt" in den Spulenkörper eingeführt werden.

Mit Vorteil umfasst die Achse ein Gehäuse, welches die Rollenmechanik aufnimmt und an welchem vorzugsweise die männlichen Verbindungsteile für die Rastverbindung bzw. die formschlüssige Verbindung mit dem Spulenkörper angeordnet sind. Die Achse bzw. das Gehäuse der Achse muss nicht geschlossen ausgebildet sein, d. h. die Achse bzw. das Gehäuse können Materialaussparungen aufweisen. Dies trägt zu einer Gewichtsreduzierung bei.

Mit Vorteil weist die Achse mindestens einen Stabilisierungsring auf. Ein derartiger Stabilisierungsring kann beispielsweise im Wesentlichen mittig auf der Achse angeordnet sein. Ein solcher Ring ist in der Regel einstückig mit dem Achsenkörper bzw. dem Gehäuse der Achse verbunden. Derartige Stabilisierungsringe dienen als Auflage für den Spulenkörper und verhindern ein Durchbiegen desselben beispielsweise bei einem Aufrollen unter Last der Angelschnur auf die Spule (zum Beispiel beim Drillen eines Fisches).

In der Regel ist an einem Ende der Achse eine Handkurbel zur Betätigung der Angelrolle angeordnet. Diese Handkurbel kann auswechselbar an der Achse angeordnet sein.

In der Regel ist die Achse an einem Ende mit einem Spulengehäuse lösbar verbunden, vorzugsweise verschraubt. Das Spulengehäuse weist in der Regel einen Fuß auf, welcher die gesamte Angelrolle mit der Angelrute verbindet und über den beide Elemente miteinander verbunden sind. Durch die lösbare Verbindung der Achse mit dem Spulengehäuse ist ein äußerst einfaches Montieren bzw. Demontieren der Angelrolle möglich.

Vorzugsweise weist die Spule an der Außenseite einer Spulenwand einen Distanzring auf. Dieser Distanzring ist insbesondere an derjenigen Außenseite der Spule angeordnet, an welcher die Achse mit dem Spulengehäuse verbunden ist. Durch den genannten Distanzring wird der Spulenkörper bei zu großem Druck in axialer Richtung zum starren Gehäuse hin begrenzt, damit die Rastelemente den Spulenkörper immer wieder in die gewünschte axiale Position bringen. Durch den Distanzring wird das Spiel der Spule in der Gesamtkonstruktion stark eingeschränkt, so dass die Rastelemente auch bei großem Druck in axialer Richtung in ihrer Rastposition verbleiben.

Vorzugsweise weist die Achse in einem inneren Bereich einen größeren Durchmesser auf als im Bereich desjenigen Endes, welches mit dem Spulengehäuse lösbar verbunden ist. Dies ergibt - wie bereits oben angedeutet- den Vorteil, dass die Achse immer nur von einer Seite in das Spulengehäuse eingeschoben werden kann.

Weitere Merkmale der Erfindung ergeben sich aus der nachfolgenden Beschreibung von bevorzugten Ausführungsformen der Erfindung in Verbindung mit der Zeichnung und den Unteransprüchen. Hierbei können die einzelnen Merkmale jeweils für sich allein oder in Kombination miteinander verwirklicht sein.

In der Zeichnung zeigt:

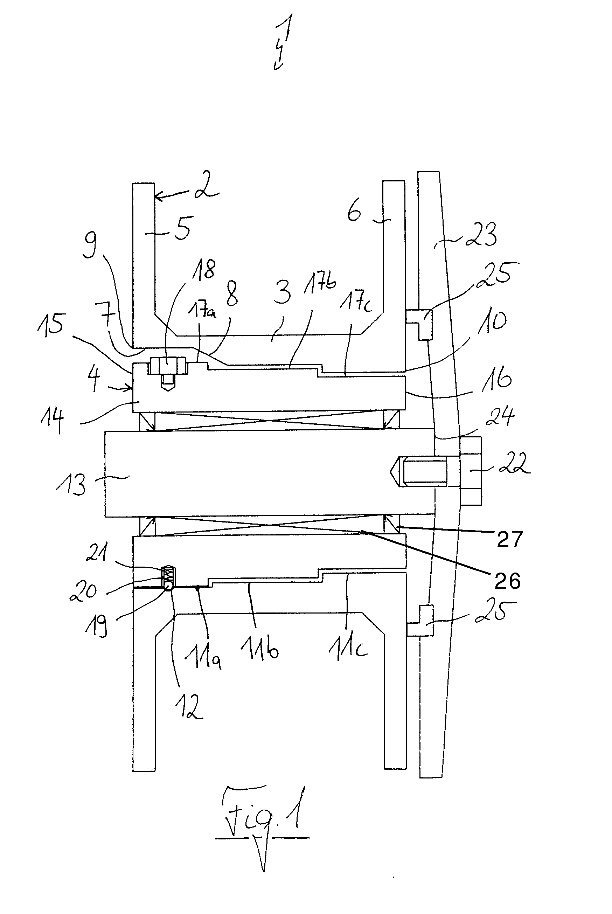

- Figur 1:: Einen Längsschnitt durch eine erfindungsgemäße Angelrolle.

Figur 1 zeigt einen Längsschnitt durch eine erfindungsgemäße Angelrolle 1 mit einer Spule 2, die mir ihrem hohlen Spulenkern 3 auf einer Achse 4 abziehbar gelagert ist. Die Spule 2 ist in der vorliegenden Zeichnung ohne Angelschnur dargestellt. Die Angelschnur ist bei einer einsatzfertigen Spule auf dem Spulenkern 3 aufgewickelt. Die Spule 2 umfasst eine äußere Spulenwand 5 und eine innere Spulenwand 6. Der Spulenkern 3 weist in seiner inneren Umfangsfläche eine in Längsrichtung verlaufende U-Nut 7 auf, welche an ihrem inneren Ende 8 abgeschrägt ausgebildet ist. Der Spulenkern 3 weist an einem Ende 9 (Öffnung 9) einen größeren Innendurchmesser auf als an dem gegenüberliegenden Ende 10. Der Innenumfang des Spulenkerns 3 ist dreistufig ausgebildet, das heißt, dass der Innenumfang des Spulenkerns in drei Zonen 11 a - 11c unterteilt ist, wobei die Zone 11a den größten Innendurchmesser und die Zone 11c den geringsten Innendurchmesser aufweist. In die Zone 11 a der inneren Umfangsfläche des Spulenkerns 3 ist eine Ringnut 12 eingebracht, welche die gesamte innere Umfangsfläche bis zur U-Nut 7 ringförmig durchzieht.

Die Achse 4 umfasst die Mechanik 13 der Rolle, die von einem im Wesentlichen walzenförmigen Gehäuse 14 umgeben ist. Das Gehäuse 14 der Achse 4 weist an einem Ende 15 einen größeren Außendurchmesser als am anderen Ende 16 auf. Der Außendurchmesser des Gehäuses 14 ist in drei Stufen 17a - 17c mit unterschiedlichen Außendurchmessern geteilt. Durch die unterschiedlichen Innenumfänge der Zonen 11a - 11c des Spulenkerns 3 und die unterschiedlichen Außendurchmesser des Gehäuses 14 der Achse 4 kann die Achse 4 nur von einem Ende 16 in das Ende 9 des Spulenkerns 3 geschoben werden. Die unterschiedlichen Innendurchmesser des Spulenkerns 3 passen im zusammengesetzten Zustand mit den unterschiedlichen Außendurchmessern des Gehäuses 14 zusammen, sodass die Achse 4 in den Spulenkern 3 formschlüssig eingepasst werden kann.

Am Gehäuse 14 ist ein keilförmiges Element 18 angeordnet, welches über den Außenumfang des Gehäuses 14 hinausragt. Das keilförmige Element 18 greift beim Einschieben der Achse 4 in den Spulenkern 3 in die Nut 7 im Spulenkern 3 ein, was zu einer formschlüssigen Verbindung des Spulenkörpers 2 mit der Achse 4 führt. Durch diese Verbindung wird die Achse 4 drehfest im Spulenkörper 2 gehalten. Die Achse 4 kann nur so in den Spulenkern 3 eingeschoben werden, dass das keilförmige Element 18 in die Nut 7 eingreift. Ein Einschieben der Achse 4 an einer anderen Stelle ist nicht möglich, da das keilförmige Element über den Außenumfang des Gehäuses 14 der Achse 4 hinausragt und der Innendurchmesser des Spulenkerns 3 auch im Bereich der größeren Öffnung 9 des Spulenkerns 3 so bemessen ist, dass das keilförmige Element nicht an einer anderen Stelle in den Spulenkern 3 eingeschoben werden kann.

Das Gehäuse 14 der Achse 4 weist ferner ein elastisches Rastelement in Form einer Kugel 19 auf, die in ihrer Führung 20 von einer Druckfeder 21 belastet ist. Die Ringnut 12 im Spulenkern 3 dient als Rastaufnahme für die Druckkugel 19.

An einer Stirnfläche 24 ist die Achse 4 mittels einer Schraube 22 mit einem Spulengehäuse 23 lösbar verbunden. Das Spulengehäuse 23 ist mit einem hier nicht dargestellten Rollenfuß zur Befestigung an einer Angelrute verbunden.

An der der genannten Stirnfläche 24 gegenüberliegenden Stirnfläche der Achse 4 ist eine hier nicht dargestellte Handkurbel angeordnet.

An der Außenseite der inneren Spulenwand 6 ist ein Distanzring 25 angeordnet. Der Distanzring 25 ist aus Kunststoff gefertigt. Durch den Distanzring 25 wird der Spulenkörper 2 bei zu großem Druck in axialer Richtung zum starren Gehäuse 23 hin begrenzt, damit die Druckkugeln 19 (insgesamt drei Stück) den Spulenkörper 2 immer wieder in die gewünschte axiale Position bringen. Durch den Distanzring wird das Spiel der Spule in der Gesamtkonstruktion stark eingeschränkt, sodass die Druckkugeln 19 auch bei großem Druck in axialer Richtung in ihrer Rastposition verbleiben.

Zwischen dem Gehäuse 14 und der Mechanik 13 ist ein Lager 26 angeordnet, damit sich die Spule 2 auf der Mechanik 13 drehen kann. Ferner sind Dichtringe 27 vorgesehen, damit kein Wasser in das Lager hinein und kein Schmierfett aus dem Lager entweichen kann.

Zur Demontage der Angelrolle 1 beziehungsweise zum Auswechseln der Spule 2 muss lediglich die Schraube 22 gelöst werden, um die Angelrolle 1 vom Spulengehäuse 23 zu trennen. Anschließend muss nur vom rechten Ende 16 der Achse 4 auf die Stirnfläche 24 der Achse 4 gedrückt beziehungsweise von der gegenüberliegenden Seite der Achse 4 an dieser gezogen werden, um die Rastverbindung zwischen den Druckkugeln 19 und der Ringnut 12 zu lösen und die Achse 4 aus dem Spulengehäuse 2 zu entnehmen.

Anstatt der gezeigten Ausbildung des Gehäuses 14 der Achse 4 mit dreifach abgestuftem Außendurchmesser kann das Grundgehäuse durchaus auch mit einem geringeren Außendurchmesser ausgebildet sein, wobei ein etwa mittig angeordneter Stabilisierungsring am Gehäuse angeformt ist, welcher einen größeren Außendurchmesser aufweist als ein am rechten Ende 16 der Achse 4 angeordneter Abschlussring. Auch durch eine solche Ausführungsform wird gewährleistet, dass die Achse 4 nur von einer Seite in das Spulengehäuse 2 eingeführt werden kann.

## Patentansprüche

1. Angelrolle, insbesondere für das Fliegenfischen, mit einer Spule (2), die mit ihrem ring- oder röhrenförmigen Nabenteil (3) auf einer Achse (4) abziehbar gelagert ist, wobei die abziehbare Achse über mindestens eine lösbare Rastverbindung axial im Nabenteil fixiert ist und über mindestens eine formschlüssige Verbindung drehfest im Spulenkörper gehalten ist, **dadurch gekennzeichnet, dass** die Achse (4) mindestens ein elastisch vorgespanntes Rastelement (19) aufweist, wobei in der inneren Umfangsfläche des Nabenteils (3) des Spulenkörpers (2) mindestens eine Rastaufnahme (12) zum Einrasten des Rastelementes vorgesehen ist, wobei das mindestens eine Rastelement eine Kugel (19) ist, die in ihrer Führung (20) von einer Druckfeder (21) belastet ist.

2. Angelrolle nach Anspruch 1, **dadurch gekennzeichnet, dass** die mindestens eine Rastaufnahme eine Nut, vorzugsweise eine Ringnut (12) ist.

3. Angelrolle nach einem der vorhergehenden Ansprüche, **dadurch gekennzeichnet, dass** die Achse (4) mindestens ein Mitnehmerelement (18), vorzugsweise einen Keil, Zapfen oder einen Stift, aufweist, welches zur formschlüssigen Verbindung mit dem Spulenkörper (2) in eine Vertiefung, vorzugsweise eine in Längsrichtung des Nabenteils verlaufende Nut (7), in der inneren Umfangsfläche des Nabenteils (3) eingreift.

4. Angelrolle nach einem der vorhergehenden Ansprüche, **dadurch gekennzeichnet, dass** das Nabenteil (3) an einem Ende (9) einen größeren Innendurchmesser aufweist als am anderen Ende (10), wobei der Innenumfang des Nabenteils vorzugsweise mehrstufig ausgebildet ist.

5. Angelrolle nach einem der vorhergehenden Ansprüche, **dadurch gekennzeichnet, dass** die Achse (4) ein Gehäuse (14) umfasst, welches die Rollenmechanik (13) aufnimmt und an welchem vorzugsweise die männlichen Verbindungsteile (19,18) für die Rastverbindung bzw. die formschlüssige Verbindung mit dem Spulenkörper (2) angeordnet sind.

6. Angelrolle nach einem der vorhergehenden Ansprüche, **dadurch gekennzeichnet, dass** die Achse (4) mindestens ein Stabilisierungselement, vorzugsweise einen Stabilisierungsring aufweist.

7. Angelrolle nach einem der vorhergehenden Ansprüche, **dadurch gekennzeichnet, dass** an einem Ende (15) der Achse (4) eine Handkurbel angeordnet ist.

8. Angelrolle nach einem der vorhergehenden Ansprüche, **dadurch gekennzeichnet, dass** die Achse (4) an einem Ende (16) mit einem Spulengehäuse (23) lösbar verbunden, vorzugsweise verschraubt ist.

9. Angelrolle nach einem der vorhergehenden Ansprüche, **dadurch gekennzeichnet, dass** die Spule (2) an der Außenseite einer Spulenwand (6) einen Distanzring (25) aufweist.

## Claims

1. A fishing reel, in particular for fly fishing, comprising a spool (2), whose annular or tubular hub part (3) is removably mounted on a shaft (4), said removable shaft being axially fixed in the hub part by means of at least one releasable detent connection and being non-rotatably retained in the body of the spool by means of at least one positive connection,
**characterized in that**
said shaft (4) comprises at least one elastically pretensioned detent element (19), at least one detent recess (12) being provided in the inner circumferential surface of the hub part (3) of the body of the spool (2) to lock the detent element into place, the at least one detent element being a ball (19) loaded in its guide (20) by a compression spring (21).

2. The fishing reel as set forth in claim 1,
**characterized in that**
said at least one detent recess is a groove, preferably an annular groove (12).

3. The fishing reel as set forth in any of the preceding claims,
**characterized in that**
said shaft (4) comprises at least one driver element (18), preferably a key, tang or pin, which engages into a depression, preferably a groove (7) running in the longitudinal direction of the hub part, in the inner circumferential surface of the hub part (3) for a positive connection with the body of the spool (2).

4. The fishing reel as set forth in any of the preceding claims,
**characterized in that**
at one end (9), said hub part (3) has a larger inner diameter than at the other end (10), the inner circumference of the hub part (3) preferably being stepped.

5. The fishing reel as set forth in any of the preceding claims,
**characterized in that**
said shaft (4) comprises a housing (14), which accommodates the reel mechanism (13) and on which preferably the male connecting parts (19, 18) for the detent or positive connection with the body of the spool (2) are arranged.

6. The fishing reel as set forth in any of the preceding claims,
**characterized in that**
said shaft (4) comprises at least one stabilizing element, preferably a stabilizing ring.

7. The fishing reel as set forth in any of the preceding claims,
**characterized in that**
a handle is arranged at one end (15) of the shaft (4).

8. The fishing reel as set forth in any of the preceding claims,
**characterized in that**
at one end (16), said shaft (4) is releasably connected, preferably screwed, to a spool housing (23).

9. The fishing reel as set forth in any of the preceding claims,
**characterized in that**
said spool (2) comprises a spacer ring (25) at the outer side of a spool wall (6).

## Revendications

1. Moulinet de pêche, en particulier pour la pêche à la mouche, comprenant une bobine (2), dont la partie de moyeu (3) annulaire ou tubulaire est montée sur un axe (4) de manière amovible, l'axe amovible étant fixé axialement dans la partie de moyeu par au moins une liaison d'encliquetage détachable et étant maintenu de manière solidaire en rotation dans le corps de bobine par au moins une liaison par forme,
**caractérisé en ce que**
l'axe (4) comprend au moins un élément d'encliquetage (19) élastiquement précontraint, au moins un logement d'encliquetage (12) étant prévu dans la surface circonférentielle intérieure de la partie de moyeu (3) pour l'encliquetage de l'élément d'encliquetage, l'au moins un élément d'encliquetage étant une bille (19), qui est sollicitée par un ressort de pression (21) dans son guidage (20).

2. Moulinet de pêche selon la revendication 1,
**caractérisé en ce que**
l'au moins un logement d'encliquetage est une rainure, de préférence une rainure annulaire (12).

3. Moulinet de pêche selon l'une quelconque des revendications précédentes,
**caractérisé en ce que**
l'axe (4) comprend au moins un élément d'entraînement (18), de préférence une cale, un tenon ou une cheville, qui s'engage dans un renfoncement, de préférence une rainure (7) s'étendant dans le sens longitudinal de la partie de moyeu, dans la surface circonférentielle intérieure de la partie de moyeu (3) pour la liaison par forme.

4. Moulinet de pêche selon l'une quelconque des revendications précédentes,
**caractérisé en ce qu'**
à une extrémité (9), la partie de moyeu (3) a un diamètre intérieur supérieur à celui à l'autre extrémité (10), le diamètre intérieur de la partie de moyeu étant, de préférence, étagé.

5. Moulinet de pêche selon l'une quelconque des revendications précédentes,
**caractérisé en ce que**
l'axe (4) comprend un boîtier (14), qui loge le mécanisme de moulinet (13) et sur lequel, de préférence, les pièces de liaison (19, 18) mâles pour la liaison d'encliquetage ou par forme avec le corps de bobine (2) sont disposées.

6. Moulinet de pêche selon l'une quelconque des revendications précédentes,
**caractérisé en ce que**
l'axe (4) comprend ou moins un élément de stabilisation, de préférence un anneau de stabilisation.

7. Moulinet de pêche selon l'une quelconque des revendications précédentes,
**caractérisé en ce qu'**
une manivelle est disposée à une extrémité (15) de l'axe (4).

8. Moulinet de pêche selon l'une quelconque des revendications précédentes,
**caractérisé en ce qu'**
à une extrémité (16), l'axe (4) est lié, de préférence vissé, de manière détachable à un boîtier de bobine (23).

9. Moulinet de pêche selon l'une quelconque des revendications précédentes,
**caractérisé en ce que**
la bobine (2) a une bague entretoise (25) sur l'extérieur d'une paroi de bobine (6).
